# EUROPÄISCHE PATENTANMELDUNG

(11) **EP 1 494 330 A1**
(43) Veröffentlichungstag der Anmeldung: **05.01.2005**
(21) Anmeldenummer: 03015198.9
(22) Anmeldetag: 04.07.2003
(51) Int. Cl.: H02G 15/072, H01B 17/26

(54) **Hochspannungs-Durchführungsableiter**

(71) Anmelder: Sefag AG, 6102 Malters (CH)
(72) Erfinder: K.O., Papailiou, Dr., Ing., 6102 Malters (CH)
(74) Vertreter: Lippich, Wolfgang, Dipl.-Phys, Dr.rer.nat.

(57) **Zusammenfassung**

Ein Hochspannungs-Durchführungsableiter (1) weist einen Durchführungsleiter (21) mit endseitigen Hochspannungsanschlüssen (2, 3), einen Überspannungsableiter (11) mit einer Varistoranordnung (14), der einerseits mit einem der Hochspannungsanschlüsse (2, 3) verbunden ist und anderseits einen Erdanschluß (10) aufweist, und ein oder mehrere außerhalb der Varistoranordnung (14) angeordnete mechanische Verbindungselemente (19) auf. Der Durchführungsleiter (21) ist außen an der Varistoranordnung (14) vorbeigeführt ist. Die mechanischen Verbindungselemente (19) sind elektrisch leitend und bilden wenigstens einen Abschnitt des Durchführungsleiters (21).

## Beschreibung

### GEBIET DER ERFINDUNG

Die vorliegende Erfindung bezieht sich allgemein auf die Ableitung von Überspannungen in Hochspannungsystemen, und beispielsweise auf einen Hochspannungs-Durchführungsableiter.

### HINTERGRUND DER ERFINDUNG

Überspannungen treten in Stromversorgungssystemen aufgrund von Blitzschlägen oder Schaltvorgängen auf. Derartige Überspannungen können Betriebsmittel, wie z.B. Isolatoren, Transformatoren usw. schädigen. Um derartige Schäden zu vermeiden, ist es bekannt, Überspannungsstöße durch Überspannungsableiter zur Erde abzuführen. Als Bauelemente für Überspannungsableiter kommen in letzter Zeit sog. Varistoren zur Anwendung. Dies sind Widerstandsbauelemente mit nicht-linearer Strom-Spannungs-Kennlinie, die bei einer bestimmten Spannung einen sog. Kniepunkt aufweist, d.h. deren Widerstand oberhalb dieser Spannung stark abnimmt. Ursprünglich waren solche Überspannungsableiter von den zu schützenden Betriebsmitteln gesonderte Einrichtungen. Da die Schutzdistanz von Überspannungsableitern relativ begrenzt ist, ging man dazu über, die Überspannungsableiter in die zu schützenden Betriebsmittel zu integrieren. Einen Überblick gibt der Artikel W. Schmidt et al.: Neue Wege für den Überspannungsschutz, ABB Technik, Heft 1/2002, Seiten 49 bis 55.

Beispielsweise ist aus der EP 0 388 779 B1 ein Hochspannungs-Endverschluß (d.h. eine Hochspannungsgarnitur mit einem Durchführungsleiter mit endseitigen Hochspannungsanschlüssen, beispielsweise zum Anschluß einer Freileitung an ein Gerät) bekannt, der mit einem integrierten Überspannungsableiter ausgerüstet ist. Um eine Hintereinanderschaltung mehrerer Varistoren zu erzielen, ist eine Varistoranordnung in Form einer Säule aus gestapelten einzelnen Varistorelementen vorgesehen. Die Varistoranordnung ist einerseits mit einem der Hochspannungsanschlüsse verbunden und weist anderseits einen Erdanschluß auf. Die Varistorelemente sind um den Durchführungsleiter herum angeordnet, und weisen hierzu in ihrem Zentrum einen Durchtritt für den Durchführungsleiter auf. Zwischen dem zentralen Durchführungsleiter und der Innenwand der diesen umgebenden Varistorsäule ist eine Innenisolation vorgesehen. Die Varistorelemente werden durch zwei Kopfarmaturen, von denen eine mit einer Feder ausgerüstet ist, zusammengedrückt. Die Kopfarmaturen sind durch ein mechanisches Verbindungselement in Form eines die Varistoranordnung außen umgebenden Porzellanschirms miteinander verbunden; dieser übertragt die Reaktionskraft der Feder (d.h. eine Zugkraft) zwischen den Kopfarmaturen.

Bei Durchführungsgarnituren sind im Stand der Technik Bauformen üblich (z.B. hergestellt von Veneta Isolatori s.r.l), die an einem Ende einen genormten Steckanschluß mit einem Steckkonus zum Herstellen einer Steckverbindung mit einem Kabel- oder Gerätstecker aufweisen. Bei diesen bekannten Garnituren ist im allgemeinen der Steckkonus einstückig mit der Außenisolation der Garnitur hergestellt, z.B. sind beide aus Siliconkautschuk in einem Arbeitsgang spritzgegosssen.

Aus der WO 00/77904 A1 ist eine steckbare Ausführung eines Hochspannungs-Durchführungsableiter nach Art der oben genannten EP 0 388 779 B1 bekannt; bei welchem der Steckkonus einstückig mit der Innenisolation im Inneren der Varistorsäule angeordneten Innenisolation ausgebildet ist (ausgenommen die Ausführungen der Fig. 7b und c, bei denen der Steckkonus - wie bei den bekannten Durchführungsgarnituren, z.B. von Veneta Isolatori - einstückig mit der Außenisolation ausgebildet ist).

Aus der DE 100 14 679 A1 ist eine Durchführungsableiter-Garnitur bekannt, bei dem innerhalb eines rohrförmigen isolierenden Kapselungsgehäuses, welches der Garnitur mechanische Stabilität verleiht, ein Durchführungsleiter und ein Überspannungsableiter in Form einer Varistorsäule nebeneinander angeordnet sind.

Aus der WO 00/55869 ist ein Überspannungsableiter (ohne Spannungsdurchführung) bekannt, welcher eine Säule aus Varistorelementen zwischen zwei Abschlußarmaturen aufweist. Die Abschlußarmaturen werden von in Axialrichtung verlaufenden Zugstäben zusammengehalten, welche um den Umfang der Varistoranordnung verteilt angeordnet sind. An den Enden der Zugstangen sind Crimphülsen aufgepreßt. Die Halterung der Zugstangen in den Abschlußarmaturen erfolgt jeweils durch eine umlaufende, mit Schlitzen versehene Auskragung, welche die Crimphülsen der in die Schlitze eingesetzten Zugstangen hinterschneidet. Die Zugstangen sind in die äußere Isolation des Ableiters (d.h. der Varistorsäule) eingebettet.

### ZUSAMMENFASSUNG DER ERFINDUNG

Die Erfindung betrifft einen Hochspannungs-Durchführungsableiter, der folgendes umfaßt: einen Durchführungsleiter mit endseitigen Hochspannungsanschlüssen; einen Überspannungsableiter mit einer Varistoranordnung, der einerseits mit einem der Hochspannungsanschlüsse verbunden ist und anderseits einen Erdanschluß aufweist; und ein oder mehrere außerhalb der Varistoranordnung angeordnete mechanische Verbindungselemente. Der Durchführungsleiter ist außen an der Varistoranordnung vorbeigeführt. Sämtliche, mehrere oder eines der mechanischen Verbindungselemente sind bzw. ist elektrisch leitend und bilden bzw. bildet wenigstens einen Abschnitt des Durchführungsleiters.

### BESCHREIBUNG DER ZEICHNUNG

Ausführungsformen der Erfindung werden nun beispielhaft und unter Bezugnahme auf die angefügte Zeichnung beschrieben, in der:
Fig. 1 eine seitliche Schnittansicht einer Ausführungsform eines Durchführungsableiters mit Festanschluß;
Fig. 2 einen Querschnitt der Ausführungsform von Fig. 1 entlang der Linie I-I;
Fig. 3 eine seitliche Schnittansicht einer weiteren Ausführungsform, die mit einem Steckanschluß ausgerüstet ist.

### BESCHREIBUNG DER BEVORZUGTEN AUSFÜHRUNGSFORMEN

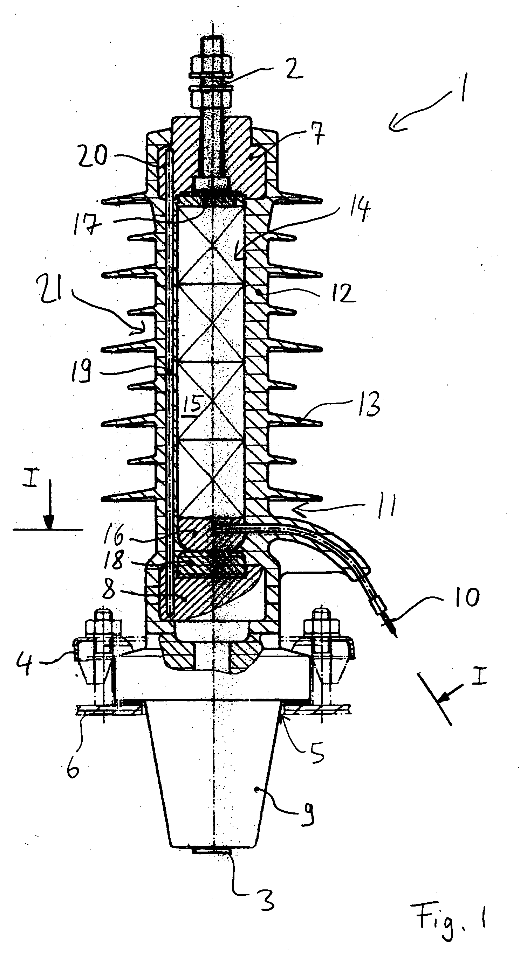

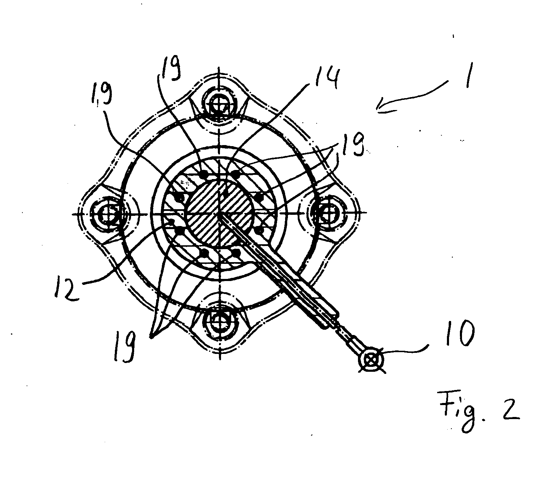

Fig. 1 zeigt eine seitliche Schnittansicht einer Ausführungsform eines Durchführungsableiters mit Festanschluß, und Fig. 2 einen dazugehörigen Querschnitt. Vor einer detaillierten Beschreibung der Fig. 1 und 2 folgen jedoch zunächst verschiedene Erläuterungen zu den Ausführungsformen.

Durchführungsgarnituren für Hochspannung (d.h. Spannungen oberhalb 1 kV) dienen im allgemeinen der Durchführung eines Hochspannungsleiters durch ein Gehäuse (z.B. ein Gehäuse eines Geräts), also beispielsweise dem elektrischen Anschluß einer Hochspannungs-Freileitung an einen, mit einem Gehäuse ausgerüsteten Transformator. Im weiteren Sinne werden jedoch hier unter Durchführungsgarnituren auch solche verstanden, welche dem Übergang von Freileitung auf Kabel oder den Anschluß von Freileitungen oder Kabeln an Geräte dienen. Bei den Ausführungsformen handelt es sich um derartige Durchführungsgarnituren, in denen ein Überspannungsableiter integriert ist; diese Garnituren werden als "Durchführungsableiter" bezeichnet.

Für die Funktion als Durchführungsleiter weisen die Durchführungsableiter endseitige Hochspannungsanschlüsse auf. Der den Überspannungsableiter bildende Teil dient dazu, Überspannungsstöße zur Erde abzuführen; er ist dazu einerseits mit einem der Hochspannungsanschlüsse verbunden (was auch die Möglichkeit einschließt, mit beiden Hochspannungsanschlüssen verbunden zu sein), und weist andererseits einen Erdanschluß auf. Der Überspannungsableiter umfaßt eine Varistoranordnung. Wie eingangs bereits erwähnt wurde, sind Varistoren Widerstandsbauelemente mit nicht-linearer Strom-Spannungs-Kennlinie, deren Widerstand oberhalb einer bestimmten Spannung stark abnimmt. Ein Überspannungsstoß oberhalb dieser Spannung wird also praktisch zur Erde abgeleitet. Die Varistoren sind beispielsweise Metalloxid-Keramik-Widerstände (z.B. Zinkoxid-Keramik-Widerstände).

Bei den Ausführungsformen sind ein oder mehrere Verbindungselemente vorgesehen, weiche außerhalb der Varistoranordnung angeordnet sind. Der Durchführungsleiter ist außen an der Varistoranordnung vorbeigeführt. Im Gegensatz dazu läuft bei den eingangs als Stand der Technik genannten Druckschriften EP 0 388 779 B1 und WO 00/77904 A1 der Durchführungsleiter mittig durch die Varistoranordnung hindurch, die zu diesem Zweck innen eine durchgehende Ausnehmung sowie eine darin zwischen Isolation zwischen Durchführungsleiter und Varistoranordnung aufweist. Bei den Ausführungsformen haben sämtliche, mehrere oder eines der mechanischen Verbindungselemente eine Doppelfunktion: Und zwar haben sie in ihrer mechanischen Verbindungsfunktion eine elektrische Funktion; sie bilden nämlich den an der Varistoranordnung außen vorbeigeführten Abschnitt des Durchführungsleiters.

Anders als bei dem genannten Stand der Technik braucht die Varistoranordnung der Ausführungsformen also keinen Durchgang für den Durchführungsleiter aufzuweisen; vielmehr weist die Varistoranordnung der Ausführungsformen in ihrem Zentrum durchgängig Varistor-Material auf. Es handelt sich also bei den Ausführungsformen um "Voll-Varistoren", während der genannte Stand der Technik torusförmige "Hohl-Varistoren" verwendet. Bei einigen der Ausführungsformen ist die Varistoranordnung durch eine Säule aus gestapelten einzelnen Varistorelementen gebildet. Zwecks Kontaktvermittlung zwischen den einzelnen Varistorelementen und zwischen jeweils einer Abschlußarmatur und dem ersten bzw. letzten Varistorelement wird die Varistorelement-Säule bei einigen Ausführungsformen durch die Abschlußarmaturen zusammengedrückt. Bei manchen Ausführungsformen ist hierfür der Durchführungsableiter mit einer Feder ausgerüstet, welche die Varistoranordnung elastisch beaufschlagt (alternativ beruht bei anderen Ausführungsformen eine entsprechende Beaufschlagung allein auf der Elastizität der mechanischen Verbindungselemente selbst). Die Feder trachtet danach, die Abschlußarmaturen aufeinander zu drücken. Die dem entgegenwirkenden Reaktionskräfte sind Zugkräfte, welche eine Auseinanderbewegung der Kopfarmaturen verhindern. Bei den Ausführungsformen sind die mechanischen Verbindungselemente so ausgebildet, daß sie die Reaktionskräfte, oder ein Teil von diesen, zwischen den Abschlußarmaturen übertragen. Bei einigen der Ausführungsformen sind die mechanischen Verbindungselemente mehrere, um die Varistoranordnung verteilt angeordnete Zugstäbe, die in Axialrichtung des Durchführungsableiters verlaufen. Hierzu sind die mechanischen Verbindungselemente so an den Anschlußarmaturen befestigt, daß sie zumindest Zugkräfte zwischen diesen übertragen.

Bei einigen der Ausführungsformen sind die Zugstäbe hierzu an ihren Enden mit Crimphülsen versehen, wie aus der WO 00/55869 bekannt ist. Bei anderen Ausführungsformen weisen eine oder beide der Abschlußarmaturen Bohrungen auf, in welche die mechanischen Verbindungselemente eingesetzt sind. Die mechanische Verbindung zwischen der (jeweiligen) Abschlußarmatur und den in die Bohrungen eingesetzten Zugstäben wird z.B. durch Verpressen der Abschlußarmatur, zumindest im Bereich der Bohrungen, hergestellt. Hierdurch wird der freie Querschnitt der Bohrungen verdrückt, so daß eine unlösbare Preßverbindung zwischen den Zugstäben und der Abschlußarmatur entsteht.

Die Herstellung des Durchführungsableiters gemäß diesen Ausführungsformen erfolgt vorzugsweise so, daß die beiden Kopfarmaturen mit den eingesetzten Zugstäben vor und während des eigentlichen Verpreßvorgangs zusammengedrückt werden, und mit dem Verpressen eine Stellung zu fixieren, bei dem die die Varistorsäule beaufschlagende Feder möglichst weitgehend komprimiert ist.

Hinsichtlich der Ausgestaltung des Durchführungsleiters ist bei den Ausführungsformen eine konzentrische Anordnung realisiert; es ist aber eine konzentrische Anordnung möglich. Unter einer exzentrischen Anordnung wird eine solche verstanden, bei welcher der gedachte Schwerpunkt des Querschnitts derjenigen mechanischen Verbindungselemente, welche den Durchführungsleiter bilden, exzentrisch zu Varistoranordnung liegt. Eine solche exzentrische Anordnung ist beispielsweise gegeben, wenn nur ein einzelner Zugstab aus leitendem Material gefertigt ist und den Durchführungsleiter bildet, die anderen Zugstäbe hingegen isolierend sind. Der Schwerpunkt des Durchführungsleiters liegt dann am Ort dieses Zugstabs, und damit exzentrisch zur Varistoranordnung. Bei einem weiteren Beispiel sind zwei benachbarte Zugstäbe aus leitendem Material, und bilden zusammen den Durchführungsleiter. Der Schwerpunkt liegt dann zwischen diesen beiden Zugstäben, und somit ebenfalls exzentrisch zur Varistoranordnung. Entsprechendes gilt, wenn mehr als zwei Zugstäbe aus leitendem Material gefertigt sind und zusammen den Durchführungsleiter bilden, solange diese Zugstäbe auf einer Seite der Varistoranordnung konzentriert sind (was z.B. bei einer Anordnung um einen Halbkreis des Varistorumfangs der Fall ist). Auch hier liegt der Schwerpunkt exzentrisch zur Varistoranordnung.

Eine konzentrische Anordnung des Durchführungsleiters ist hingegen dann gegeben, wenn der Schwerpunkt der den Durchführungsleiter bildenden Verbindungselemente mit der Achse der Varistoranordnung zusammenfällt. Dieser Fall liegt beispielsweise vor, wenn die den Durchführungsleiter bildenden Zugstäbe gleichverteilt am Umfang der Varistoranordnung und unter gleichem Abstand zu deren Zentrum angeordnet sind. Dies ist insbesondere der Fall, wenn sämtliche (oder etwa jedes zweite) der Verbindungselemente elektrisch leitend sind und den Durchführungsleiter bilden.

Bei den Ausführungsformen ist der Erdanschluß des Überspannungsableiters, ausgehend von dem zu erdenden Ende der Varistoranordnung, seitlich aus dem Durchführungsableiter herausgeführt. Bei Ausführungsformen mit exzentrischer Anordnung des Durchführungsleiters ist der Erdanschluß an der Durchführungsleiter (d.h. genauer: dem Schwerpunkt des Durchführungsleiters) abgewandten Seite der Varistoranordnung herausgeführt. Bei Ausführungsformen mit konzentrischer Anordnung des Durchführungsleiters ist der Erdanschluß zwischen zwei (beliebigen) benachbarten mechanischen Verbindungselementen seitlich herausgeführt.

Bei den Ausführungsformen sind die mechanischen Verbindungselemente in eine, die Varistoranordnung außen umgebende Isolation eingebettet. Bei Ausführungsformen mit konzentrischer Anordnung des Durchführungsleiters ist diese Isolation aus Symmetriegründen vorzugsweise ebenfalls konzentrisch ausgebildet. Bei manchen der Ausführungsformen mit exzentrischer Anordnung des Durchführungsleiters ist natürlich grundsätzlich ebenfalls eine konzentrische Ausbildung der Isolation möglich; bei manchen dieser Ausführungsformen weist jedoch die Isolation eine Exzentrizität auf, derart, daß die Isolationswandstärke im Bereich der elektrisch leitenden, zum Durchführungsleiter gehörenden Verbindungselemente größer als im Bereich der isolierenden, rein mechanisch wirkenden Verbindungselemente. Eine Exzentrizität der Isolation kann beispielsweise dadurch erzielt sein, daß die Varistorsäule exzentrisch zur Längsachse des Durchführungsableiters angeordnet ist. Eine solche exzentrische Ausbildung der Isolation minimiert die Menge des erforderlichen Isolationsmaterials, welche vorzugsweise Silicongummi ist, also ein relativ teures Material mit einem relativ hohem Anteil an den Gesamtherstellungskosten des Durchführungsableiters ist.

Durchführungsgarnituren sind im Stand der Technik in zwei verschiedenen Grundausführungen üblich, und zwar einerseits als fest anzuschließende Garnituren, und andererseits, wie eingangs erwähnt wurde, als genormte steckbare Garnituren. Entsprechend sind auch einige der vorliegenden Ausführungsformen für Festanschluß, und andere für Steckanschluß ausgebildet. Bei den Ausführungsformen mit Festanschluß ist der Durchführungsableiter beispielsweise dazu bestimmt, fest in eine entsprechende Gehäuseöffnung eines Geräts (z.B. eines Transformators) eingesetzt zu werden. Das eine Ende des Durchführungsableiters ragt nach außen von dem Gehäuse weg, beispielsweise zum Anschluß einer Freileitung. Das andere Ende erstreckt sich in das Innere des beispielsweise mit Öl gefüllten Gehäuses, und ist dafür eingerichtet, dort fest mit einem Leiter (z.B. mit Hilfe einer Schraubklemme) verbunden zu werden. Wenn der Durchführungsableiter ausgetauscht werden muß (etwa weil die Varistoranordnung durch eine Überspannung Schaden genommen hat) ist bei dieser Ausführung daher ein Öffnen des (z.B. mit Öl gefüllten) Gehäuses erforderlich.

Bei Ausführungsformen mit Steckanschluß ist der Durchführungsableiter nicht zum Einbau in eine Gehäuseöffnung bestimmt, sondern zur Herstellung einer lösbaren Steckverbindung mit einer komplementären Steckdurchführung. Bei der Steckverbindung kann es sich um eine kombinierte Steck-/Schraubverbindung handeln, wobei die Verschraubung einerseits der Sicherung der Steckverbindung und andererseits der Stromübertragung dient. Die Steckverbindung entspricht vorzugsweise genormten Steckverbindungen für Kabelsteckverbinder oder Transformatoreinführungen, beispielsweise Norm DIN 47636, Teil 5. Zum Anschluß eines Geräts gemäß dem obigen Beispiel ist bei der steckbaren Ausführungsform in die genannte Gehäuseöffnung die Steckdurchführung fest eingesetzt, die im Innern fest mit einem Leiter verbunden ist und außen ein zum Steckanschluß des Durchführungsableiters komplementäres Steckverbinderteil aufweist. Der Durchführungsableiter wird, wie beim obigen Beispiel, an einem Ende beispielsweise mit einer Freileitung verbunden, am anderen Ende wird er jedoch mit seinem Steckanschluß lösbar auf das komplementäre Steckverbinderteil aufgesteckt. Hierdurch ist ein einfacher Tausch des Durchführungsableiters ohne Öffnung des Gehäuses möglich.

Die beschriebenen Ausführungsformen sind gegenüber den im Stand der Technik bekannten Durchführungsableitern mit zentralem Durchführungsleiter und Hohlvaristoren in thermischer Hinsicht vorteilhaft, da aufgrund der peripheren Anordnung die im Durchführungsleiter erzeugte Verlustwärme leichter nach außen abgeführt wird. Insbesondere wurde zudem erkannt, daß Vollvaristoren wegen ihrer geringeren Explosionsneigung gegenüber Hohlvaristoren vorteilhaft sind. Bei Überlastung kommt es in torusförmigen Hohlvaristoren nämlich hauptsächlich am Innenloch zum Zerbrechen des Varistors, und auch Lichtbögen entstehen hauptsächlich im inneren Kanal der Varistorsäule. Diese stellt eine Art Druckkammer dar, die beim Auftreten eines Lichtbogen aufgrund der starken Erwärmung explodiert. Durchführungsableiter mit peripherer Spannungsdurchführung verhalten sich diesbezüglich günstiger. Auch sind Vollvaristoren leichter mit größerer Materialhomogenität herstellbar als Hohlvaristoren. Schließlich können die hier beschriebenen Durchführungsableiter mit peripherem Durchführungsleiter mit deutlich geringerem Aufwand hergestellt werden als die im Stand der Technik bekannten Durchführungsableiter mit im Zentrum angeordnetem Durchführungsleiter, und auch als bekannte Durchführungsableiter mit in einem tragenden Kapselungsgehäuse nebeneinander angeordnetem Durchführungsleiter und Überspannungsableiter.

Nun zurückkehrend zu den Fig. 1 und 2, zeigen diese eine seitliche Schnittansicht sowie einen Querschnitt entlang der Linie I-I einen Durchführungsableiter 1 mit Festanschluß. Dieser hat eine insgesamt längliche Form, in deren Zentrum eine gedachte Längsachse L verläuft. Der Durchführungsableiter 1 hat einen (allgemein mit 21 bezeichneten) Durchführungsleiter, welcher zwei endseitige Hochspannungsanschlüsse elektrisch verbindet, von denen einer "äußerer Hochspannungsanschluß" 2 und der andere "innere Hochspannungsanschluß" 3 genannt wird. Diese Benennung beruht darauf, daß der Durchführungsableiter 1 dazu eingerichtet ist, mit Hilfe eines Befestigungsflansches 4 in einer Öffnung 5 einer Gehäusewand 6 eines Geräts (z.B. eines Transformators) so befestigt zu werden, daß der äußere Hochspannungsanschluß 2 außerhalb des Gehäuses, der innere Hochspannungsanschluß 3 jedoch im Inneren des Gehäuses liegt, außen und innen bedeuten also "weg vom Gehäuse" bzw. "zum Gehäuse hin". Beide Hochspannungsanschlüsse 2, 3 haben z.B. die Form von Schraubbolzen, die jeweils Teil einer endseitigen leitenden Abschlußarmatur 7, 8 sind und sich von dieser auf der Längsachse L nach außen bzw. innen erstrecken. Am Ende sind die Hochspannungsanschlüsse 2, 3 jeweils mit einer Einrichtung für eine feste Leiterverbindung versehen, z.B. einer Klemme. Der äußere Hochspannungsanschluß 2 ist beispielsweise zur Verbindung mit einer Freileitung bestimmt, der innere Hochspannungsanschluß 3 kann beispielsweise der Verbindung mit einem im Inneren des Geräts liegenden Leiter dienen. Im Bereich des inneren Endes des Durchführungsableiters 1 ist ein konisches Formteil 9, beispielsweise aus Gießharz vorgesehen, welches z.B. für ölgefüllte Geräte eine normgemäße Kriechstrecke für die Potentialdifferenz zwischen dem inneren Hochspannungsanschluß 3 und der auf Erde liegenden Gehäusewand 6 im Öl bildet. In das Formteil 9 ist einerseits die innere Abschlußarmatur 8 eingebettet; andererseits ist an ihm der Befestigungsflansch 4 an einem Kragen befestigt, so daß das Formteil neben der genannten elektrischen Funktion auch einen Teil der mechanischen Halterung des Durchführungsableiters 1 am Gehäuse bildet. Knapp außerhalb des Befestigungsflansches 4 ist ein Erdanschluß 10 für einen im Durchführungsableiter 1 integrierten Überspannungsableiter 11 seitlich herausgeführt. Der Erdanschluß 10 wird vorzugsweise mit einem gesonderten Erdleiter verbunden, kann fallweise aber auch an das geerdete Gehäuse oder einer Abtrennvorrichtung angeschlossen werden. Der sich vom Befestigungsflansch 4 nach außen erstreckende Teil des Durchführungsableiters 1 ist an seiner äußeren Mantelfläche mit einer einstückig hergestellten Außenisolation 12, vorzugsweise aus Silicongummi ausgerüstet, welche die Abschlußarmaturen 7, 8 sowie einen Teil des seitlich herausgeführten Erdanschlusses 10 umfaßt und außerdem, zum Zweck der Kriechstreckenverlängerung, einen oder mehrere Schirme 13 aufweist. Diese erstrecken sich z.B. radial nach außen, können aber - für einen stehenden Einbau des Durchführungsableiters 1 - auch leicht nach innen (d.h. zum Gerät hin) geneigt sein.

Der Überspannungsableiter 11 wird durch die äußere Abschlußarmatur 7, eine Säule 14 aus einzelnen, aufeinander gesetzten Varistorelementen 15, einen inneren Abschlußleiterteil 16 sowie den aus diesem herausführenden Erdanschluß 10 gebildet. Zwischen der äußeren Abschlußarmatur 7 und dem äußersten Varistorelement 15 ist eine komprimierte Tellerfeder 17 eingesetzt, welche die Varistorelemente 15 gegeneinander sowie gegen die äußere Abschlußarmatur 7 und das äußere Abschlußleiterteil 16 drückt und somit der Erzielung eines ausreichenden elektrischen Kontakts zwischen den genannten Elementen dient. Das innere Abschlußleiterteil 16 liegt unter Zwischenschaltung eines Isolierstücks auf der inneren Anschlußarmatur auf. Die beiden Anschlußarmaturen 7, 8 halten die Varistorsäule 14 mechanisch zusammen, jedoch ist das innere Abschlußleiterteil 16 somit elektrisch gegenüber der inneren Abschlußarmatur 8 isoliert. Zur Vermeidung hoher Feldstärken sind die inneren Kanten des inneren Abschlußleiterteils verrundet.

Zur Aufnahme der Reaktionskräfte der Tellerfeder zwischen den beiden Abschlußarmaturen 7, 8 dienen Zugstäbe 19. Diese verlaufen jeweils in Richtung der Längsachse L und sind um den Umfang der Varistorsäule 14 herum verteilt angeordnet. Bei der in Fig. 2 gezeigten Ausführungsform ist diese Anordnung regelmäßig, bei anderen Ausführungsformen können unterschiedliche Abstände zwischen Zugstäben vorgesehen sein. Die Zugstäbe 19 sind in Bohrungen 20 in den Abschlußarmaturen 7, 8 eingesetzt. Sie sind durch Verpressung unlösbar mit der jeweiligen Abschlußarmatur 7, 8 verbunden. Wie erwähnt, dienen die Zugstäbe 19 der Übertragung der Reaktionskraft der Tellerfeder 17 zwischen den Abschlußarmaturen 7, 8. Daneben nehmen sie aber auch Zug- und Druckkräfte bei äußerer Einwirkung auf den Durchführungsableiter, wie Zug, Druck, Biegung, Torsion auf und verleihen damit dem Durchführungsableiter 1 Stabilität nach Art eines Längsgerüsts.

Die Zugstäbe 19 haben nicht nur diese Funktion mechanischer Verbindungselemente, sondern bilden auch einen Abschnitt des die beiden Hochspannungsanschlüsse 2, 3 verbindenden Durchführungsleiters 21. Dieser Durchführungsleiter 21 wird somit durch die beiden Abschlußarmaturen 7, 8 und die Zugstäbe 19 gebildet. Zu diesem Zweck sind die Zugstäbe 19 elektrisch leitend ausgebildet, z.B. aus Kupfer oder Aluminium gefertigt. Eine ausreichende Kontaktierung mit den Abschlußarmaturen 7, 8 wird durch die genannte Verpressung in den Bohrungen 20 erzielt.

Bei einigen der Ausführungsformen sind sämtliche Zugstäbe 19 als elektrisch Leiter ausgeführt, und bilden Teil des Durchführungsleiters 21. Bei anderen Ausführungsformen sind nur einige der Zugstäbe 19 als metallische Leiter ausgebildet. Die übrigen Zugstäbe sind bei diesen Ausführungsformen aus einem nicht-leitenden, mechanisch geeignet belastbaren Material gefertigt, wie z.B. glasfaserverstärktem Kunststoff. Beispielsweise kann nur jeder zweite der Zugstäbe 19 leitend ausgeführt sein, oder es können mehrere (z.B. zwei) benachbarte Zugstäbe 19 auf einer Seite der Varistorsäule 14 (z.B. zwei benachbarte Zugstäbe 19) leitend ausgeführt sein, während die übrigen nicht-leitend sind. Bei einer der Ausführungsformen ist sogar nur einer der Zugstäbe 19 leitend ausgebildet, während sämtliche anderen nicht-leitend sind. Die Befestigung der nicht-leitenden Zugstäbe 19 an den Abschlußarmaturen 7, 8 erfolgt ebenfalls in der oben beschriebenen Weise durch Einsetzen und Verpressen in den Bohrungen 20.

Möglich sind somit - im Querschnitt gesehen - bezüglich der Längsachse L konzentrische und exzentrische Anordnungen der elektrisch leitenden Zugstäbe 19. Bei konzentrischen Anordnungen fällt der Schwerpunkt der leitenden Zugstäbe mit der Längsachse L zusammen, bei exzentrischen Anordnungen ist er gegenüber der Längsachse L versetzt.

Bei Ausführungsformen mit konzentrischer Anordnung der leitenden Zugstäbe 19 ist der Erdanschluß 10 zu einer beliebigen Seite hin zwischen zwei Zugstäben 19 seitlich herausgeführt. Bei Ausführungsformen mit exzentrischer Anordnung der leitenden Zugstäbe 19 ist der Erdanschluß 10 zu derjenigen Seite herausgeführt, welcher dem genannten Schwerpunkt gegenüberliegt. "Gegenüberliegen" bedeutet in diesem Zusammenhang beispielsweise, daß der Schwerpunkt, die Längsachse L und der Erdanschluß 10 einen Winkel im Bereich von 135 bis 225° bilden.

Die Zugstäbe 19 sind in einem bestimmten Abstand zur Varistorsäule 14 angeordnet. Bei der Ausführungsform gemäß Fig. 2 ist dieser Abstand für alle Zugstäbe 19 gleich. Die Varistorsäule 14 ist einschließlich der sie umfassenden Teile, nämlich der Abschlußarmaturen 7, 8, des inneren Abschlußleiterteils 16 und des Isolierstücks 18, der Tellerfeder 17 und der Zugstäbe 19 in die Außenisolation 12 eingebettet, welche vorzugsweise zusammen mit den Schirmen 13, z.B. aus Siliconkautschuk, einstückig spritzgegossen ist. Die Außenisolation 12 erfüllt mehrere Funktionen. Und zwar dient sie: (i) als Isolation zwischen der Varistorsäule 14 und den als Durchführungsleiter fungierenden leitenden Zugstäben 19; (ii) als Isolation zwischen der Varistorsäule 14 und der äußeren Oberfläche des Durchführungsableiters 1; (iii) als Isolation zwischen den leitenden Zugstäben 19 und der äußeren Oberfläche des Durchführungsableiters 1; (iv) als Kriechstreckenverlängerung, realisiert durch die Schirme 13; und (v) als mechanisches Stabilisierungselement des Durchführungsableiters 1 zusammen mit den eingebetteten Zugstäben 19.

Möglich sind auch Ausführungsformen mit exzentrischer Anordnung der Varistorsäule gegenüber der Zugstabanordnung und der Außenisolation. Bei diesen Ausführungsformen sind z.B. zwei leitende Zugstäbe vorgesehen, die benachbart mit eventuell geringerem Abstand zueinander als die übrigen, nicht-leitenden Zugstäbe angeordnet sind. Da zwischen der Varistorsäule und den nicht-leitenden Zugstäben keine Isolation benötigt ist, sondern nur zwischen dieser und den leitenden Zugstäben, kann die Isolation gegenüber dem Zentrum der Zugstabanordnung versetzt angeordnet sein, und zwar weg versetzt von den leitenden Zugstäben. Hierdurch wird bei gleichem Einsatz von Isolationsmaterial erreicht, daß die Isolationswandstärke zwischen den leitenden Zugstäben und der Varistorsäule größer als bei einer vergleichbaren Ausführungsform mit konzentrischer Anordnung von Varistorsäule und Zugstabanordnung ist.

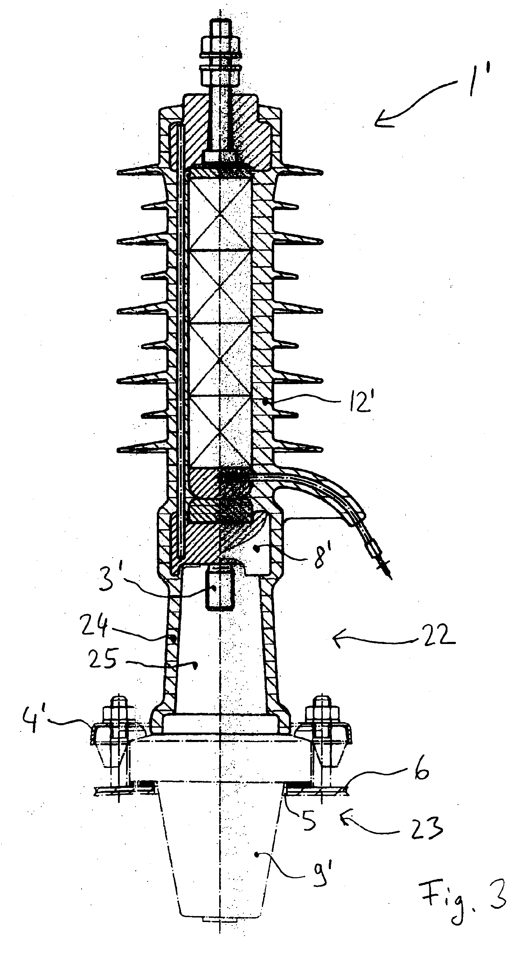

Fig. 3 zeigt einen Durchführungsableiter 1' mit Steckanschluß, der allgemein mit 22 bezeichnet ist. Dieser ist statt des Befestigungsflansches 4 und des Formteils 9 der Ausführungsform von Fig. 1 vorgesehen. Die Funktion dieser Teile übernimmt hier eine gesonderte Steckdurchführung 23, welche - in Analogie zur Fig. 1 - einen Befestigungsflansch 4' und ein Kriechstrecken-Formteil 9' aufweist und fest in eine Öffnung 5 einer Gehäusewand 6 einsetzbar ist. Die Steckdurchführung 23 ist nicht Teil des Durchführungsableiters 1' von Fig. 3, kann also bei dessen Austausch an der Gehäusewand 6 verbleiben.

Der Steckanschluß 22 ist durch eine innenkonische Steckmuffe 24 gebildet, in deren Grund sich mittig ein Leiterkontaktbolzen 3' befindet. Bei einigen Ausführungsformen ist die Steckmuffe 24 als gesondert hergestelltes Formteil an die innere Abschlußarmatur 8' angesetzt. Bei anderen Ausführungsformen, wie der in Fig. 3 gezeigten, ist die Steckmuffe 24 hingegen, wie bei den eingangs genannten bekannten Durchführungsgarnituren mit einstückiger Ausbildung von Außenisolation und Steckanschluß, z.B. von Veneta Isolatori, einstükkig mit der Außenisolation 12' hergestellt, beispielsweise in einem Pressgieß-Vorgang. Sie besteht vorzugsweise aus dem gleichen Material wie die Außenisolation 12', z.B. aus Silicongummi. Die Steckmuffe 24 und der Leiterkontaktbolzen 3' des Steckanschlusses 22 sind komplementär zu einem Gießharz-Außenkonus 25 bzw. einem Leiterkontaktbolzen-Gegenstück der Steckdurchführung 23 ausgebildet. Zusammen bilden diese Teile eine genormte Steckverbindung, z.B. für Transformatoreinführungen gemäß DIN 47636, Teil 5. Bei der Steckverbindung kann es sich um eine rein translatorische Steckverbindung handeln, oder um eine Steck-Dreh-Verbindung, bei welcher der Leiterkontaktbolzen 3' mit einem Gewinde zum Eingriff in ein entsprechendes Gegengewinde im Leiterkontaktbolzen-Gegenstück ausgerüstet ist. Im letzteren Fall wird der Durchführungsableiter 1' beim Aufstecken gedreht, so daß die genannten Gewindeteile in Eingriff kommen und eine Fixierung des Durchführungsableiter 1 ' in der Steckdurchführung 23 bewirken. Alle übrigen im Zusammenhang mit Fig. 1 und 2 beschriebenen Merkmale und Funktionen gelten in entsprechender Weise auch für die Ausführungsform der Fig. 3.

Die Herstellung z.B. der Ausführungsform gemäß Fig. 3 kann beispielsweise durch folgende Schritte erfolgen:
- die Varistorsäule, das Abschlußleiterteil mit dem Erdanschluß, das Isolierstück, die Tellerfeder, die Abschlußarmaturen sowie die leitenden und nicht-leitenden Zugstäbe werden zusammengefügt;
- die Abschlußarmaturen werden zum Vorspannen der Tellerfeder zusammengedrückt, und in diesem zusammengedrückten Zustand werden die Zugstäbe in den Abschlußarmaturen verpreßt;
- das so erhaltene, einstückige Garniturgerippe wird in eine Gießform eingebracht, die der späteren Außenkontur des Durchführungsableiters (einschließlich Schirmen und Steckmuffe) entspricht (wobei für die Innenkontur der Steckmuffe eine mit der inneren Abschlußarmatur zu verbindende Hilfsform verwendet werden kann;
- die Gießform wird im Spritzgießverfahren mit Siliconkautschuk ausgegossen, dieser wird gehärtet.

Die beschriebenen Ausführungsformen stellen somit Durchführungsableiter bereit, welche hinsichtlich des Betriebsverhaltens (insbesondere im Hinblick auf Explosionsneigung) vorteilhaft sind und mit geringerem Aufwand als im Stand der Technik bekannte Lösungen herstellbar sind.

## Patentansprüche

1. Hochspannungs-Durchführungsableiter (1, 1'), umfassend:
einen Durchführungsleiter (21) mit endseitigen Hochspannungsanschlüssen (2, 3);
einen Überspannungsableiter (11) mit einer Varistoranordnung (14), der einerseits mit einem der Hochspannungsanschlüsse (2, 3) verbunden ist und anderseits einen Erdanschluß (10) aufweist; und
ein oder mehrere außerhalb der Varistoranordnung (14) angeordnete mechanische Verbindungselemente (19);
**dadurch gekennzeichnet, daß**
der Durchführungsleiter (21) außen an der Varistoranordnung (14) vorbeigeführt ist, und
sämtliche, mehrere oder eines der mechanischen Verbindungselemente (19) elektrisch leitend sind bzw. ist und wenigstens einen Abschnitt des Durchführungsleiters (21) bilden bzw. bildet.

2. Hochspannungs-Durchführungsableiter nach Anspruch 1, wobei die Varistoranordnung (14) in ihrem Zentrum durchgängig Varistor-Material aufweist.

3. Hochspannungs-Durchführungsableiter nach Anspruch 1 oder 2, wobei die Varistoranordnung (14) durch eine Säule aus gestapelten einzelnen Varistorelementen (15) gebildet ist.

4. Hochspannungs-Durchführungsableiter nach einem der Ansprüche 1 bis 3, wobei die einen oder mehreren mechanischen Verbindungselemente (19) so ausgebildet sind, daß sie Kräfte zum Zusammendrücken der Varistoranordnung (14) übertragen.

5. Hochspannungs-Durchführungsableiter nach Anspruch 4, wobei die mechanischen Verbindungselemente (19) mehrere, um die Varistoranordnung (14) verteilt angeordnete Zugstäbe sind.

6. Hochspannungs-Durchführungsableiter nach einem der Ansprüche 1 bis 5,
wobei die Varistoranordnung (14) zwischen zwei Abschlußarmaturen (7, 8) angeordnet ist, und
wobei die mechanischen Verbindungselemente (19) so an den Abschlußarmaturen (7, 8) befestigt sind, daß sie zumindest Zugkräfte zwischen den Abschlußarmaturen (7, 8) übertragen.

7. Hochspannungs-Durchführungsableiter nach Anspruch 6,
wobei die mechanischen Verbindungselemente (19) in Bohrungen (20) in wenigstens einer der Abschlußarmaturen (7, 8) eingesetzt sind, und
die mechanische Verbindung zwischen der Abschlußarmatur (7, 8) und den in die Bohrungen (20) eingesetzten mechanischen Verbindungselementen (19) durch Verpressen der Abschlußarmatur (7, 8), zumindest im Bereich der Bohrungen (20), hergestellt ist.

8. Hochspannungs-Durchführungsableiter nach einem der Ansprüche 1 bis 7, welcher mit wenigstens einer Feder (17) ausgerüstet ist, welche die Varistoranordnung (14) elastisch beaufschlagt.

9. Hochspannungs-Durchführungsableiter nach einem der Ansprüche 1 bis 8,
wobei der Erdanschluß (10) zwischen zwei benachbarten mechanischen Verbindungselementen (19) seitlich herausgeführt ist.

10. Hochspannungs-Durchführungsableiter nach einem der Ansprüche 1 bis 9, wobei die mechanischen Verbindungselemente (19) in eine die Varistoranordnung (14) außen umgebende Isolation (12) eingebettet sind.

11. Hochspannungs-Durchführungsableiter nach einem der Ansprüche 1 bis 10, wobei die endseitigen Hochspannungsanschlüsse (2, 3) als Festanschlüsse ausgebildet sind.

12. Hochspannungs-Durchführungsableiter nach einem der Ansprüche 1 bis 10, wobei wenigstens einer der endseitigen Hochspannungsanschlüsse (3) als Steckanschluß oder Steck-Dreh-Anschluß ausgebildet ist.
